# EUROPEAN PATENT APPLICATION

(11) **EP 2 348 380 A1**
(43) Date of publication of application: **27.07.2011**
(21) Application number: 10192546.9
(22) Date of filing: 25.11.2010
(51) Int. Cl.: G06F 1/16, F16M 11/08, H04N 5/64

(54) **Stand for display apparatus and display apparatus having the same**

(30) Priority: 21.12.2009 KR 20090128152
(71) Applicant: SAMSUNG ELECTRONICS CO., LTD., Suwon-si Gyeonggi-do 442-742 (KR)
(72) Inventor: Kim, Jin Sung, Seoul (KR); Park, Jae Hoo, Gyeonggi-do (KR); In, Won Sung, Gyeonggi-do (KR)
(74) Representative: Land, Addick Adrianus Gosling

(57) **Abstract**

A display apparatus includes: an apparatus body including a screen; a guide member coupled to the apparatus body; a neck member coupled to the guide member to support the apparatus body; and a base member coupled to a lower part of the neck member to support the display apparatus on an installation place. The guide member includes an electromotive module, disposed in the guide member, coupled to the neck member to enable rotation between the neck member and the guide member.

## Description

Apparatuses and methods consistent with exemplary embodiments relate to a swivel type stand for a display apparatus and a display apparatus having the same.

Display apparatuses with the increased screen size and decreased thickness, such as, for example, a liquid crystal display (LCD) and a plasma display panel (PDP), have recently become widely popular. This is because these display apparatuses provide a high quality image and have a small thickness to occupy a small space in which the display apparatus is installed. The display apparatus may be directly mounted to a wall or may be disposed on a floor or a table using an additional stand.

The stand is provided to support the display apparatus on the floor in an upright state. The stand may have various shapes.

When the screen of the display apparatus is not clearly visible, a user may apply force to an apparatus body of the display apparatus to change the position of the apparatus body. However, to change of the position of the display apparatus when the user watches the screen, may be troublesome.

Exemplary embodiments address at least the above problems and/or disadvantages and other disadvantages not described above. Also, an exemplary embodiment is not required to overcome the disadvantages described above, and an exemplary embodiment may not overcome any of the problems described above.

Exemplary embodiments provide a stand for a display apparatus to swivel an apparatus body of the display apparatus in an electromotive manner and a display apparatus having the same. Exemplary embodiments also provide a stand for a display apparatus to swivel an apparatus body of the display apparatus in a manual manner and a display apparatus having the same. Exemplary embodiments also provide a stand for a display apparatus to swivel an apparatus body of the display apparatus in an electromotive manner wherein the stand includes a transparent neck member and a display apparatus having the same.

In accordance with an aspect of an exemplary embodiment, there is provided a display apparatus including an apparatus body including a screen, a guide member coupled to the apparatus body, a neck member which is coupled to the guide member and supports the apparatus body, and a base member which is coupled to a lower part of the neck member and supports the display apparatus on an installation place, wherein the guide member includes an electromotive module, which is disposed in the guide member, and coupled to the neck member to enable rotation between the neck member and the guide member.

The guide member may further include a drive circuit board which supplies power to the electromotive module and transmits a control signal to the electromotive module.

The guide member may include a guide member case forming an external casing, and the electromotive module and the drive circuit board may be disposed in the guide member case. The drive circuit board may be electrically connected to the apparatus body and controls the electromotive module according to an operation signal of the electromotive module received from the apparatus body when power is supplied to the drive circuit board.

The electromotive module may include a module body, a motor disposed in the module body, a plurality of gears which is connected to the motor and transmits drive force, and a drive plate which is provided at a bottom of the module body to be directly coupled to the neck member and is rotatably connected to the module body.

The guide member is replaceable with a manual guide member which does not include the electromotive module removed.

The neck member may be made of a transparent material.

The guide member may include an additional remote control signal receiving part which directly receives a signal of a remote control, and the remote control signal receiving part may transmit the received signal to the drive circuit board.

The drive circuit board operates the electromotive module when power from an additional external power source is supplied to the drive circuit board.

The electromotive module is operatively connected to a user interface unit manipulated by a user.

The user interface unit may include a user interface through which the user inputs a request command and a controller which controls an operation of the electromotive module according to the request command.

The request command is input to the user interface through a remote control.

The controller may include an on-screen display which displays information on the operation of the electromotive module on the screen, and the operation of the electromotive module may be selected using a position setting menu displayed on the on-screen display.

The request command may include a left swivel command to swivel the apparatus body left and a right swivel command to swivel the apparatus body right, the left swivel command and the right swivel command may be input by activating a left button and a right button of the remote control, respectively, and the on-screen display may be provided with a left swivel indicating mark and a right swivel indicating mark which respectively flicker when one of the left swivel command and the right swivel command is input.

The request command may further include a memory command which stores a swiveled position of the apparatus body, the memory command is input by activating a memory button of the remote control, and the on-screen display may be provided with at least one memory mark selected by the user to store the swiveled position of the apparatus body when the memory command is input.

The request command may further include a memory execution command to return the apparatus body to the swiveled position stored according to the memory command, and the memory execution command may be performed by activating a button of the remote control corresponding to the at least one memory mark.

The electromotive module is operated to return the apparatus body to an initial position in which the apparatus body is disposed substantially parallel to the base member when the display apparatus is turned off.

In accordance with an aspect of another exemplary embodiment, there is provided a stand for a display apparatus, the stand including a guide member coupled to an apparatus body of the display apparatus, a neck member which is coupled to the guide member and supports the apparatus body, and a base member which is coupled to a lower part of the neck member and supports the display apparatus on an installation place, wherein the guide member includes an electromotive guide member comprising an electromotive module to rotate the apparatus body mounted therein.

The guide member may further include a drive circuit board which supplies power to the electromotive module and transmits a control signal to the electromotive module.

The guide member may further include a guide member case forming an external casing, and the electromotive module and the drive circuit board may be disposed in the guide member case.

The electromotive module may include a module body, a motor disposed in the module body, a plurality of gears which is connected to the motor and transmits drive force, and a drive plate which is provided at a bottom of the module body to be directly coupled to the neck member and is rotatably connected to the module body.

The guide member is replaceable with a manual guide member which does not include the electromotive module.

The neck member may be made of a transparent material.

### BRIEF DESCRIPTION OF THE DRAWINGS

The above and/or other aspects of exemplary embodiments will become apparent by describing certain exemplary embodiments, with reference to the accompanying drawings, in which:
FIG. 1 is a front view illustrating a display apparatus which uses a stand according to an exemplary embodiment;
FIG. 2 is a rear perspective view of the display apparatus of FIG. 1;
FIG. 3 is an exploded perspective view of the display apparatus of FIG. 2;
FIG. 4 is an exploded perspective view of the display apparatus when viewed at a different angle than in FIG. 2;
FIG. 5 is a view illustrating the interior of a guide member;
FIG. 6 is a view illustrating swiveling of a display apparatus according to an exemplary embodiment;
FIG. 7 is a block diagram illustrating swiveling of the display apparatus;
FIG. 8 is a view illustrating a replaceable guide member; and
FIG. 9 is a view illustrating a display apparatus according to another exemplary embodiment.

### DETAILED DESCRIPTION OF EXEMPLARY EMBODIMENTS

Certain exemplary embodiments are described in greater detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters.

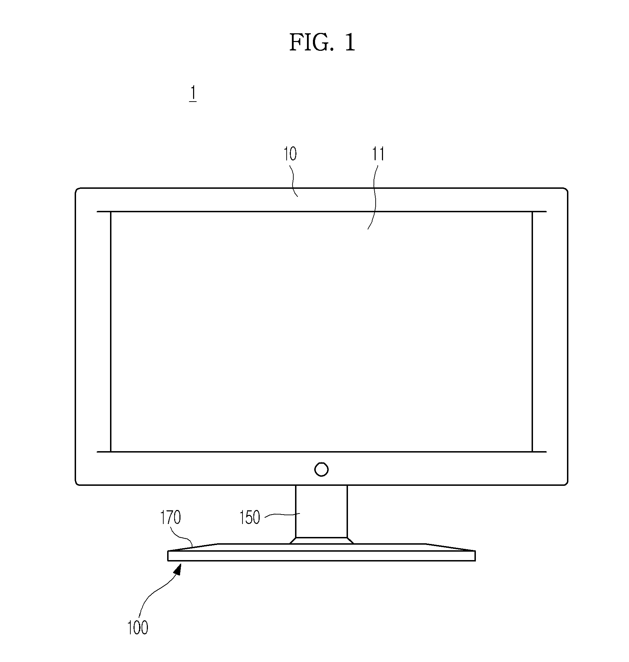

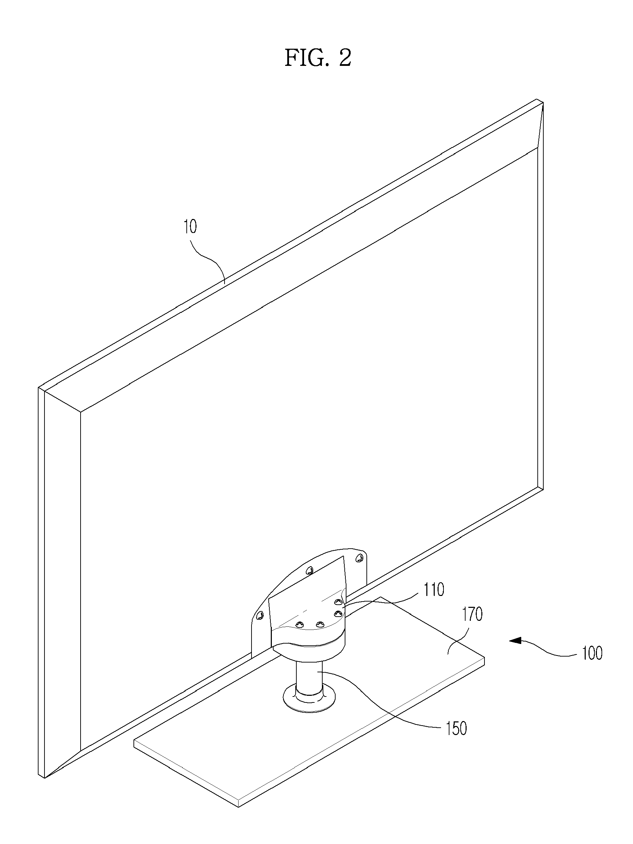

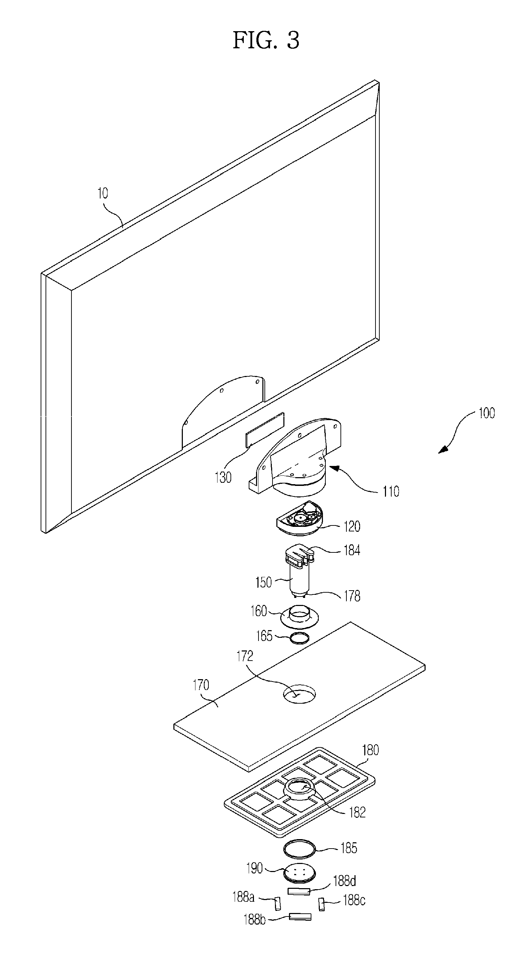

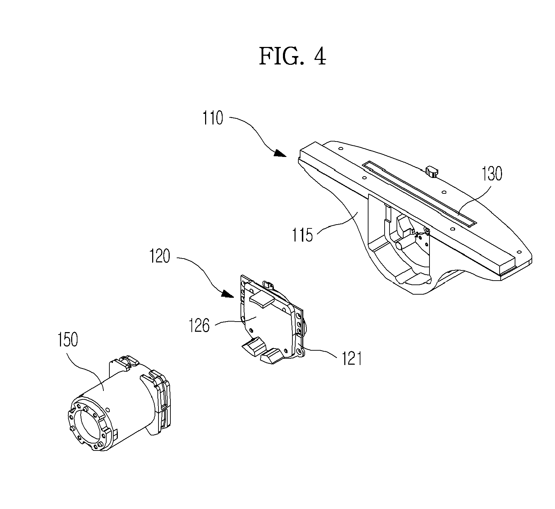

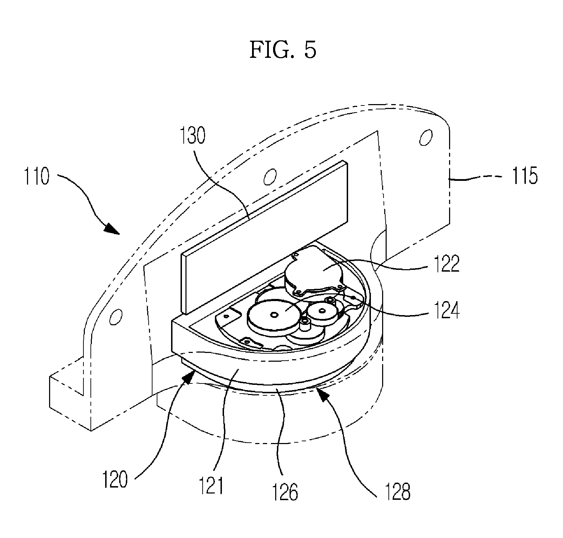

FIG. 1 is a front view illustrating a display apparatus 1 which uses a stand according to an exemplary embodiment. FIG. 2 is a rear perspective view of the display apparatus 1 of FIG. 1. FIG. 3 is an exploded perspective view of the display apparatus 1 of FIG. 2. FIG. 4 is an exploded perspective view of the display apparatus 1 when viewed at a different angle than in FIG. 2. FIG. 5 is a view illustrating the interior of a guide member.

As shown in FIG. 1, the display apparatus 1 includes an apparatus body 10 having a screen 11. A stand 100 supports the apparatus body 10 upright. The apparatus body 10 may be a slim television (TV) such as an LCD or a PDP.

As shown in FIGS. 2 and 3, the stand 100 includes a guide member 110 coupled to the apparatus body 10, a neck member 150 coupled to the guide member 110 to support the apparatus body 10, and a base member 170 coupled to the lower part 178 of the neck member 150 to support the entirety of the display apparatus 1 at an installation place.

The guide member 110 is coupled to the rear of the apparatus body 10 by screws (not shown). The guide member 110 contacts the rear of the apparatus body 10 over a predetermined area to keep the apparatus body 10 upright and transmits a load of the apparatus body 10 to the neck member 150. In this exemplary embodiment, the guide member 110 is coupled to the outside rear of a cover of the apparatus body 10. Alternatively, the guide member 110 may be disposed in the apparatus body 10 so that the guide member 110 is coupled to a display module (not shown) forming the screen 11.

The guide member 110 includes an electromotive module 120 coupled to the neck member 150 to enable rotation between the neck member 150 and the guide member 110, as described in detail below.

The neck member 150 may be made of a transparent material. The neck member 150 is mounted between the apparatus body 10 and the base member 170 to support the apparatus body 10. The upper part 184 of the neck member 150 is coupled to the guide member 110, and the lower part of the neck member 150 is coupled to a swivel bracket 190, by screws (not shown), through the base member 170 and a base bracket 180. Before the neck member 150 is fitted in the base member 170, a decorative cover 160 may be fitted on the lower circumference of the neck member 150. The decorative cover 160 is a structure to decorate the external appearance of the stand 100.

The base member 170 may be a rectangular glass plate having a through hole 172 formed in the center thereof. The base member 170 may be silk-screened. The base member 170 uniformly disperses the load of the apparatus body 10 transmitted from the neck member 150 over the installation place to stably support the apparatus body 10.

The base bracket 180 is coupled to the bottom of the base member 170 by a double-sided adhesive tape (not shown) to enhance the strength of the base member 170. A through hole 182 is formed in the center of the base bracket 180. The base bracket 180 may be made of iron or steel.

Two swivel rings 165 and 185 are mounted during the assembly of the stand 100. The swivel rings 165 and 185 are fixed by fixing caps (not shown) to prevent the rotation between the neck member 150 and the base member 170 during an electromotive operation. In a manual operation, the fixing caps are removed to allow the rotation of the apparatus body 10 with respect to the base member 170 when force is applied to the apparatus body 100.

Feet 188a, 188b, 188c, and 188d are provided at the bottom of the base bracket 180 to prevent scratching of the installation place of the display apparatus 1. The feet 188a, 188b, 188c, and 188d may be made of rubber. The base bracket 180 is spaced apart by a predetermined distance from the installation place by the feet 188a, 188b, 188c, and 188d.

The guide member including the electromotive module 120 is described in detail below.

As shown in FIGS. 4 and 5, the guide member 110 includes a guide member case 115 forming the external casing, an electromotive module 120 disposed in the middle of the guide member case 115, and a drive circuit board 130 disposed at one side of the guide member case 115 to be electrically connected to the electromotive module 120.

The electromotive module 120 enables rotation between the neck member 150 and the guide member 110. The electromotive module 120 includes a module body 121, a motor 122 disposed at one side of the module body 121, a plurality of gears 124 connected to the motor 122 to transmit drive force, and a drive plate 126 provided at the bottom portion 128 of the module body 121 proximate to the neck member 150, to be directly coupled to the neck member 150 so that the drive plate 126 is rotated.

The drive circuit board 130 is electrically connected to the apparatus body 10 to control the electromotive module 120 according to an operation signal of the electromotive module 120 received from the apparatus body 10 when power from the apparatus body 10 is supplied to the drive circuit board 130.

That is, the drive circuit board 130 receives an operation signal of the electromotive module 120 and power from the apparatus body 10, and operates the electromotive module 120 using the received operation signal and power. The electromotive module 120 operates the motor 122 according to an operation signal of the drive circuit board 120. Drive force from the motor 122 is transmitted to the drive plate 126 via the gears 124, and the drive plate 126 is rotated relative to the module body 121.

The neck member 150 coupled to the drive plate 126 and the base member 170 coupled to the neck member 150 do not move due to the friction with the installation place. The module body 121 of the electromotive module 120, the guide member 110, and the apparatus body 10, which are located above the installation place, are swiveled. Although swivel force is applied to the drive plate 126, the guide member 110 and the apparatus body 10, not the drive plate 126, are swiveled. Since the electromotive module 120 to swivel the apparatus body 10 is included in the guide member 110, the guide member 110 functions as an electromotive guide member.

Swiveling of a display apparatus 1 according to an exemplary embodiment is described in detail below.

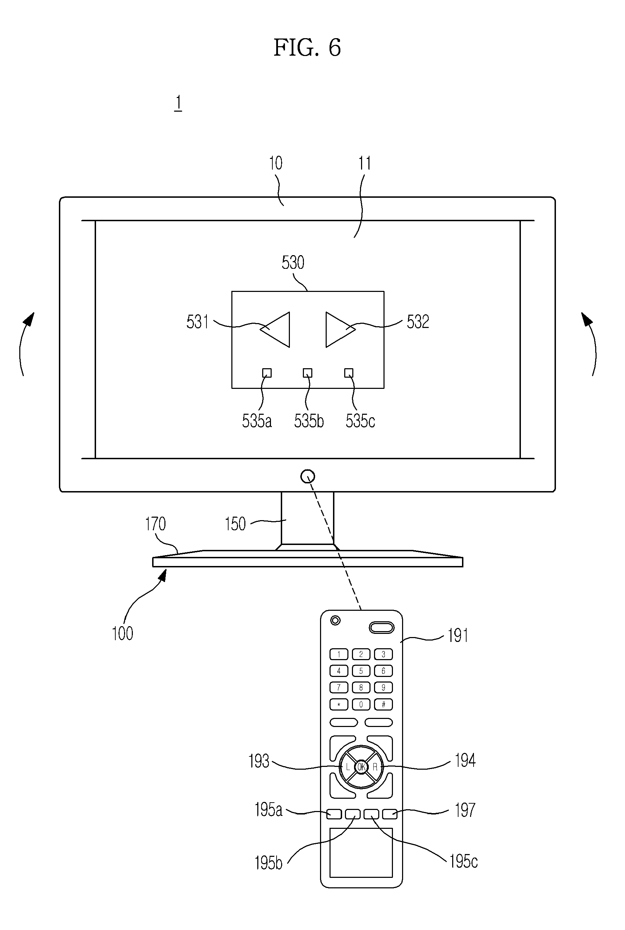

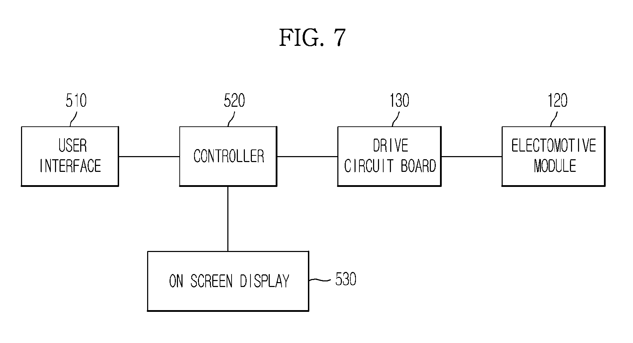

FIG. 6 is a view illustrating swiveling of a display apparatus according to an exemplary embodiment. FIG. 7 is a block diagram illustrating swiveling of the display apparatus. Referring to FIGS. 6 and 7, the electromotive module 120 is operatively connected to a user interface unit manipulated by a user.

The user interface unit includes a user interface 510 to allow a user to input a request command and a controller 520 to control the operation of the electromotive module 120 according to the request command. The controller 520 includes an on-screen display 530 to display information on the operation of the electromotive module 120 on the screen 11. The operation of the electromotive module 120 is selected using a position setting menu displayed through the on-screen display 530.

The request command may be input through a remote control 191. When a left button 193 or a right button 194 of the remote control 191 is pushed, the position setting menu appears for the user to adjust the position of the apparatus body 10.

The request command includes a left swivel command to swivel the apparatus body 10 to the left and a right swivel command to swivel the apparatus body 10 to the right. The left swivel command is input by pushing the left button 193, and the right swivel command is input by pushing the right button 194.

When the left swivel command and the right swivel command are input, a left swivel indicating mark 531 and a right swivel indicating mark 532 on the on-screen display 530 flicker.

At the same time, the controller 520 transmits the operation signal of the electromotive module 120 to the drive circuit board 130, and the electromotive module 120 is operated according to a signal of the controller 520, with the result that the apparatus body 10 is swiveled.

The user may input a memory command to store the swiveled position of the apparatus body 10 as a request command.

That is, when a memory button 197 of the remote control 191 is pushed in a state in which the apparatus body 10 is swiveled, and a red button 195a, a green button 195b, or a yellow button 195c of the remote control 191 is pushed to select a first storage space 535a, a second storage space 535b, or a third storage space 535c, the swiveled position of the apparatus body 10 with respect to the base member 170 is stored. The first storage space 535a, the second storage space 535b, and the third storage space 535c are memory marks which the user selects to store the position of the apparatus body 10.

A memory execution command to recall the stored position is performed as follows. When the left button 193 or the right button 194 of the remote control 191 is pushed to enter the position setting menu, and one of the buttons 195a, 195b, and 195c is pushed, the apparatus body 10 is swiveled to the position stored in one of the storage spaces 535a, 535b, and 535c. When the display apparatus 1 is turned off, the apparatus body 10 returns to an initial position where the apparatus body 10 is disposed in parallel to the base member 170. This is because the apparatus body 10 swiveled left or right when not in use may not provide an aesthetically pleasing appearance.

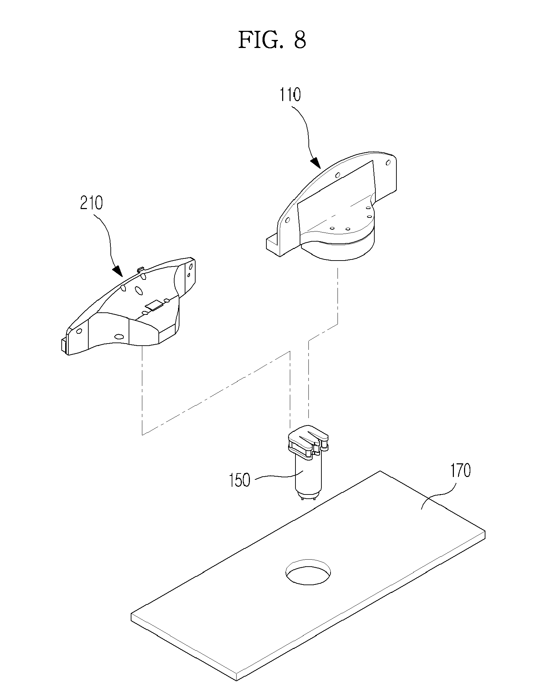

FIG. 8 is a view illustrating a replaceable guide member.

As shown in FIG. 8, the guide member 110 including the electromotive module 120 may be replaced with a manual guide member 210 excluding the electromotive module 120.

That is, when the guide member 110 including the electromotive module 120 is replaced with the manual guide member 210, a user may apply force to the apparatus body 10 to swivel the apparatus body 10 instead of swiveling the apparatus body 10 in an electromotive manner. The manual guide member 210 is different from the guide member 110 including the electromotive module 120 in that the manual guide member 210 does not include the electromotive module 120 and the drive circuit board 130, but the connection of the manual guide member 210 to the apparatus body 10 and the neck member 150 is the same as that of the guide member 110 including the electromotive module 120 to the apparatus body 10 and the neck member 150.

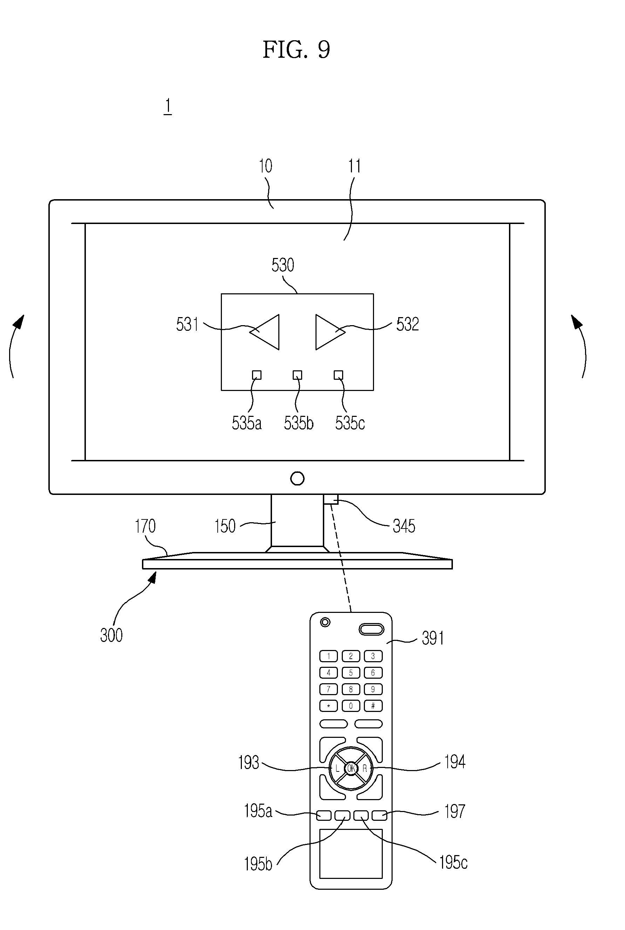

FIG. 9 is a view illustrating a display apparatus according to another exemplary embodiment. A description of the components provided above is not repeated.

In this exemplary embodiment, the display apparatus includes a stand 300.

That is, a guide member 110 includes a remote control signal receiving part 345 to directly receive a signal of a remote control 391. The remote control signal receiving part 345 transmits the received signal to a drive circuit board 130. Power from an additional external power source is supplied to the drive circuit board 130 so that the drive circuit board 130 operates an electromotive module 120.

As described above with reference to FIGS. 4-7, the electromotive module 120 receives the control signal and power from the apparatus body 10. In this exemplary embodiment, the electromotive module 120 is operated independently of the apparatus body 10. Specifically, the electromotive module receives the operation signal through the remote control signal receiving part 345, and the power from the additional power source, not from the apparatus body 10, is supplied to the electromotive module 120.

The stand 300 is operated independently of the apparatus body 10, and therefore, the stand 300 may be used with various kinds of apparatus bodies 10. That is, the apparatus body 10 may be changeable to use the stand 300.

As it is apparent from the above description, the display apparatus and the stand include the electromotive module, thereby achieving swiveling of the apparatus body of the display apparatus in the electromotive manner.

An electromotive module is included in a guide member connected to the apparatus body. The electromotive module swivels the apparatus body according to an operation signal of the electromotive module received from a drive circuit board when power from the drive circuit board is supplied to the electromotive module. The electromotive module is disposed in the guide member.

Also, the electromotive module is disposed in the guide member, and therefore, the neck member may be made of a transparent material.

In addition, the guide member including the electromotive module may be replaced with the manual guide member, thereby achieving swiveling of the apparatus body of the display apparatus in the manual manner.

Although a few embodiments of the present invention have been shown and described, it would be appreciated by those skilled in the art that changes may be made in these embodiments without departing from the principles and spirit of the inventive concept, the scope of which is defined in the claims and their equivalents.

## Claims

1. A display apparatus comprising:
an apparatus body comprising a screen;
a guide member coupled to the apparatus body;
a neck member coupled to the guide member to support the apparatus body; and
a base member coupled to a lower part of the neck member to support the display apparatus over an installation place,
wherein the guide member comprises an electromotive module which is disposed in the guide member and coupled to the neck member to enable rotation between the neck member and the guide member.

2. The display apparatus according to claim 1, wherein the guide member further comprises a drive circuit board to supply power to the electromotive module and to transmit a control signal to the electromotive module.

3. The display apparatus according to claim 2, wherein
the guide member comprises a guide member case forming an external casing, and the electromotive module and the drive circuit board are disposed in the guide member case.

4. The display apparatus according to claim 2 or 3, wherein the drive circuit board is electrically connected to the apparatus body to control the electromotive module according to an operation signal of the electromotive module received from the apparatus body when power is supplied to the drive circuit board.

5. The display apparatus according to any of claims 1-4, wherein the electromotive module comprises:
a module body;
a motor disposed in the module body;
a plurality of gears which is connected to the motor and transmits drive force; and
a drive plate which is provided at a bottom portion of the module body to be directly coupled to the neck member and is rotatably connected to the module body.

6. The display apparatus according to any of claims 1-5, wherein the guide member is replaceable with a manual guide member with the electromotive module removed.

7. The display apparatus according to any of claim 1-6, wherein the neck member is made of a transparent material.

8. The display apparatus according to any of claims 2-7, wherein
the guide member comprises an additional remote control signal receiving part to directly receive a signal of a remote control, and
the remote control signal receiving part transmits the received signal to the drive circuit board.

9. The display apparatus according to claim 8, wherein the drive circuit board operates the electromotive module when power from an additional external power source is supplied to the drive circuit board.

10. The display apparatus according to any of claims 2-9, wherein the electromotive module is operatively connected to a user interface unit manipulated by a user.

11. The display apparatus according to claim 10, wherein the user interface unit comprises a user interface to allow the user to input a request command and a controller to control an operation of the electromotive module according to the request command.

12. The display apparatus according to claim 11, wherein the request command is input to the user interface through a remote control.

13. The display apparatus according to claim 11 or 12, wherein
the controller comprises an on-screen display to display information on the operation of the electromotive module on the screen, and
the operation of the electromotive module is selected using a position setting menu displayed through the on-screen display.

14. The display apparatus according to claim 12 or 13, wherein
the request command comprises a left swivel command to swivel the apparatus body left and a right swivel command to swivel the apparatus body right,
the left swivel command and the right swivel command are input by pushing a left button and a right button of the remote control, respectively, and
the on-screen display is provided with a left swivel indicating mark and a right swivel indicating mark which respectively flicker when the left swivel command or the right swivel command is input.

15. The display apparatus according to claim 14, wherein
the request command further comprises a memory command to store a swiveled position of the apparatus body,
the memory command is input by pushing a memory button of the remote control, and the on-screen display is provided with at least one memory mark selected by the user to store the swiveled position of the apparatus body when the memory command is input.
